# EUROPEAN PATENT APPLICATION

(11) **EP 4 550 022 A1**
(43) Date of publication of application: **07.05.2025**
(21) Application number: 24208699.9
(22) Date of filing: 24.10.2024
(51) Int. Cl.: G02B 21/28, G02B 7/00, G01N 1/42, G02B 21/26

(54) **CRYOGENIC ANALYSIS ASSEMBLIES AND CRYOGENIC ANALYTICAL METHODS**

(30) Priority: 02.11.2023 US 202318386580
(71) Applicant: Montana Instruments Corporation, Bozeman Montana 59715 (US)
(72) Inventor: MAURITSEN, Luke, Bozeman, MT59715 (US); DOHERTY, Josh, Bozeman, MT59715 (US); MORRIS, Mark, Bozeman, MT59715 (US); CURRY, John, Bozeman, MT59715 (US)
(74) Representative: Norton, Ian Andrew

(57) **Abstract**

Cryogenic analysis assemblies and methods are provided. The assemblies and/or methods can be configured for optical sample analysis. The assemblies and/or methods can include: an objective assembly operatively aligned with a sample support assembly, both the objective assembly and sample support assembly residing within a vacuum housing; wherein the objective assembly defines an objective mount housing an objective coupled to a mounting ring within a chamber below a heater assembly; and an insulative member between the objective mount and the mounting ring, the insulative member supporting the objective mount and thermally isolating the objective mount from the mounting ring.

## Description

### CROSS REFERENCE TO RELATED APPLICATION

This application is a continuation-in-part of U.S. Patent Application Serial No. 14/666,093 which was filed March 23, 2015, which claims priority to and the benefit of U.S. Provisional Patent Application Serial No. 61/968,651 which was filed on March 21, 2014, the entirety of each of which is incorporated by reference herein.

### TECHNICAL FIELD

The present disclosure relates to cryogenic analysis assemblies and cryogenic analytical methods. In particular embodiments, the present disclosure relates to assemblies and methods that include the use of microscope objectives during cryogenic analysis.

### BACKGROUND

Many cryogenic researchers use optical microscopy to study single molecules. This is achieved by using a microscope objective to focus and/or collect light from a sample which is held at cryogenic temperatures. Microscope objectives are precisely manufactured chains of lenses which can only be used at room-temperature. High light collection efficiency also requires the objective to have a very small working distance between its tip and a sample. Researchers have historically traded off objective performance for longer working distances to allow the objective to be mounted outside of the cryostat.

The present disclosure provides cryogenic analytical assemblies and cryogenic analytical methods, embodiments of which overcome one or more of the shortcomings of the prior art cryogenic analytical assemblies and methods, particularly those using microscopic objectives.

### SUMMARY

Cryogenic analysis assemblies and methods are provided. The assemblies and/or methods can be configured for optical sample analysis. The assemblies and/or methods can include: an objective assembly operatively aligned with a sample support assembly, both the objective assembly and sample support assembly residing within a vacuum housing; wherein the objective assembly defines an objective mount housing an objective coupled to a mounting ring within a chamber below a heater assembly; and an insulative member between the objective mount and the mounting ring, the insulative member supporting the objective mount and thermally isolating the objective mount from the mounting ring.

### DRAWINGS

Embodiments of the disclosure are described below with reference to the following accompanying drawings.
Fig. 1 is a portion of a cryogenic analysis assembly according to an embodiment.
Fig. 2 is another configuration of a portion of a cryogenic analysis assembly according to an embodiment of the disclosure.
Fig. 3 is a cryogenic analysis assembly according to an embodiment of the disclosure.
Fig. 4 is an exploded view of the cryogenic analysis assembly of Fig. 3 according to an embodiment of the disclosure.
Fig. 5 depicts a portion of the cryogenic analysis assembly of Fig. 3 according to an embodiment of the disclosure.
Fig. 6 depicts an isometric cutaway view of a portion of a cryogenic analysis assembly according to an embodiment of the disclosure.
Fig. 7 is a depiction of the cryogenic analysis assembly of Fig. 3 according to an embodiment of the disclosure.
Fig. 8 depicts components of the cryogenic analysis assembly according to an embodiment of the disclosure.
Fig. 9 depicts more components of the cryogenic analysis assembly according to an embodiment of the disclosure.
Fig. 10 depicts an exploded view of a component of the cryogenic analysis assembly according to an embodiment of the disclosure.
Fig. 11 depicts a cutaway isometric view of the component of Fig. 10 according to an embodiment of the disclosure.
Fig. 12 depicts a portion of the cryogenic analysis assembly of Fig. 7 according to an embodiment of the disclosure.
Fig. 13 depicts more components of the cryogenic analysis assembly according to an embodiment of the disclosure.
Fig. 14 depicts a portion of the cryogenic analysis assembly of Fig. 7 according to an embodiment of the disclosure.
Fig. 15 depicts more components of the cryogenic analysis assembly according to an embodiment of the disclosure.

### DESCRIPTION

This disclosure is submitted in furtherance of the constitutional purposes of the U.S. Patent Laws "to promote the progress of science and useful arts" (Article 1, Section 8).

Applicants have recognized that the prior art use of longer working distances places windows between the objective and the sample, and these windows can cause aberrations.

Applicants have also recognized that microscope use for extended periods of time can give rise to thermal drift associated with fluctuations in room temperature. As the mount used to hold the objective warms or cools its material expands or contracts causing the objective to go in and out of focus on a sample.

Mechanical vibrations also create problems for researchers. Applicants have recognized that flimsy mounts can cause the objective to move, relative to the sample, beyond its optical resolution.

The present disclosure provides assemblies and methods that can maintain an object at an elevated temperature while it is mechanically aligned with a sample inside a cryogenic system. Using the assemblies and methods of the present disclosure, this may be accomplished by the interaction of three components: a cryogenic base, a thermally insulating support, a heater, and a thermometer. The present assemblies can interface a microscope objective with a working distance greater than zero to image a sample between 0 Kelvin and 350 Kelvin with zero aberrations caused by window interfaces.

Beyond the primary usage of interfacing an objective at room temperature to a cryogenic atmosphere by isolating the thermal loads, this device can be maintained at very precise temperatures accurate to <10mk which enables a virtually thermal drift free environment to provide optical stability.

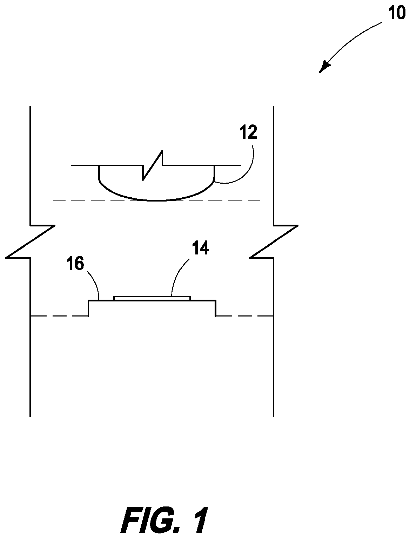

The assemblies and methods of the present disclosure will be further described with reference to Figs. 1-15. Referring first to Fig. 1, a portion of a cryogenic analysis assembly 10 according to an embodiment of the disclosure is shown that includes an objective 12 and a sample 14 upon a sample support 16. In accordance with example implementations, Fig. 1 depicts an operable alignment of objective 12 with sample 14 within a cryogenic assembly. Objective 12 can be a set of optics and/or lenses that may or may not be bundled, but are configured to provide a view of sample 14 operatively aligned therewith. Sample 14 can be a solid sample and sample support 16 can be configured to support sample 14 in operable viewing alignment with objective 12 as well as be cooled or warmed.

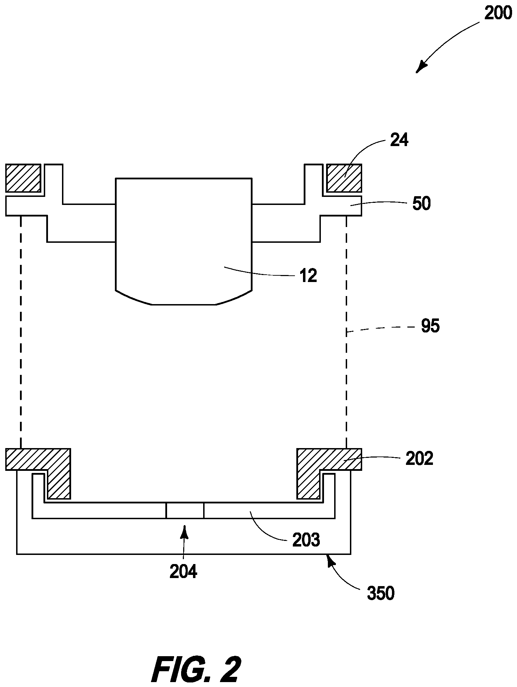

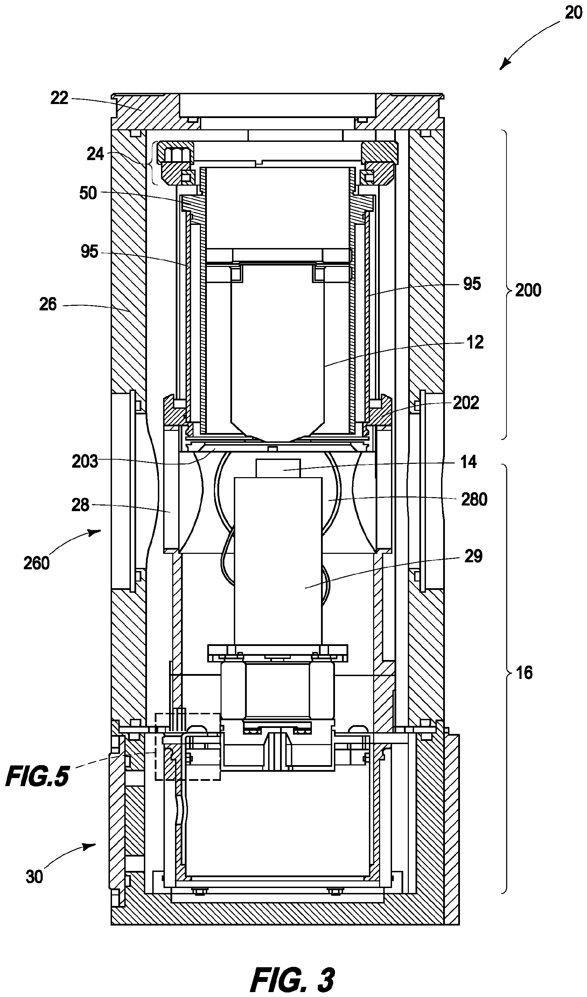

Objective 12 can be maintained at a temperature that is different than the temperature of its surroundings. For example, the temperature of objective 12 can be different than the temperature of the sample and/or sample support. The temperature of objective 12 and/or optics and/or lenses and/or lens surfaces of objective 12 can be at least 250 K and/or at least 100 K different than sample 14 and/or sample support assembly 16. Sample 14 and/or sample support assembly 16 can be less than about 200 K and in some embodiments maintained at less than 40K and/or a temperature of about 4 K. An objective assembly 200 of the cryogenic analysis assembly is provided in Figs. 2 and 3 according to an embodiment of the disclosure. Assembly 200 can include objective 12 and an objective mount 50 to which the objective 12 can be mounted. Assembly 200 can further include a mounting ring 202 to operatively align the objective assembly 200 with the sample 14. Mounting ring 202 can attach via screws or other mechanisms to the sample support assembly 16 or radiation shield 28. Mounting ring 202 may be attached to a component at cryogenic temperatures. Objective assembly 200 can further include a thermally insulating support 95 between objective mount 50 and mounting ring 202 to facilitate objective mount 50 and mounting ring 202 having different temperatures. Objective assembly 200 can further include a thermal control or heater assembly 24 that can be controlled to maintain objective 12 at room temperature for example. To shield sample 14 from the heat radiation load of a room temperature objective 12 for example, objective assembly 200 can further include a radiation shield 203 that mounts to the mounting ring 202. The radiation shield 203 can further include a small aperture or window 204 to allow the objective 12 viewing access to the sample 14.

Objective mount 50 is also shown in Fig. 2 and can provide for adjustment of the objective 12 closer and further away from the sample 14 as shown in Fig 3. Additionally, the objective mount 50 can allow for transverse movement of objective 12 relative to sample 14. Objective mount 50 can allow for indexing of position/distance relative to sample support assembly 16. Objective mount 50 can be configured for integration of different objectives 12, different form factor and/or different optical properties.

Fig. 2 also depicts optional removable alignment reference 350 which allows for simplified positioning/focus of objective 12. Alignment reference 350 may be configured for different free working distances of objective 12.

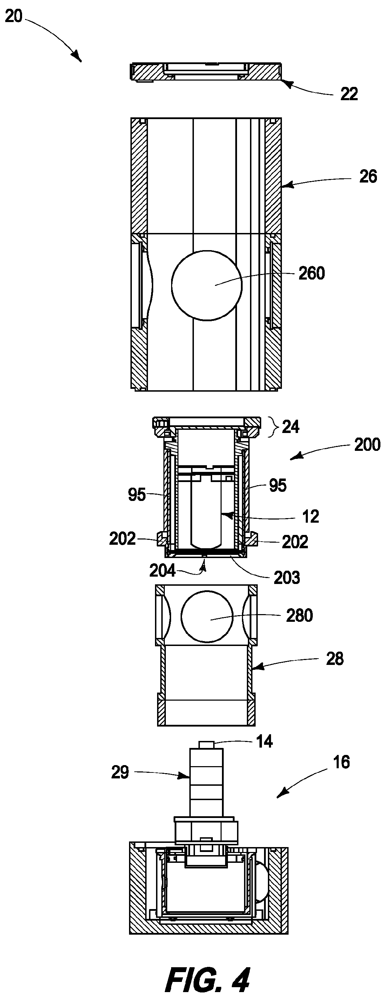

Referring to Figs. 3 and 4, a cryogenic analysis assembly 20 is depicted in both cross section and exploded view that includes objective assembly 200 configured such that objective 12 is operatively aligned with sample 14 within sample support assembly 16. Assembly 20 can include sample support assembly 16 that physically supports the sample. Assembly 20 can include a vacuum housing 26 and vacuum housing lid 22 that may be maintained at room temperature. About sample 14 and within housing 26 can be shield 28 which can be configured to reduce radiation transmission between sample 14 and housing 26. Shield 28 may prevent transmission of 40 K radiation to housing 26 for example by insulating sample 14 from housing 26. Shield 28 may be constructed of aluminum for example. Positioners 29 can be Piezo driven and reside below sample 14.

As shown in Figs. 3 and 4, cryogenic assembly 20 includes objective assembly 200 operatively aligned with sample shield 28 and sample support assembly 16 within vacuum housing 26. Objective assembly 200 can be configured such that objective 12 is operatively aligned with sample 14. Vacuum housing 26 can include housing viewing ports 260. Assembly 20 can include a vacuum housing lid 22 that may be maintained at room temperature.

Between objective assembly 200 and sample support assembly 16 can be sample radiation shield 28 that can be operatively aligned about sample 14 and within housing 26. Sample shield 28 can be configured to prevent radiation transmission between sample 14 and housing 26. Shield 28 can be constructed of thermally conductive material (e.g., aluminum. copper) and also include sample viewing ports 280 when operatively aligned allowing viewing of sample 14 via ports 260 and 280. Shield 28 can be maintained at the same temperature as a portion of the sample support assembly (e.g., 1^{st} stage 40K). By maintaining shield 28 at these lower temperatures, higher temperatures, such as those of portions of the objective assembly and/or housing 26, can be shielded from sample 14. As part of sample support assembly 16, positioners 29 can be Piezo driven and reside below sample 14.

Obj ective assembly 200 can further include a heater assembly 24 that can be controlled to maintain objective 12 at a predetermined temperature; for example, greater than a temperature of mounting ring 202, radiation shield 203, sample radiation shield 28 (see, e.g., Fig. 3), sample 14, and/or sample support assembly 16. As an example, heater assembly 24 can maintain mount 50 and objective 12, as well as additional portions of objective assembly 200 at 300K, while mounting ring 202, radiation shield 203, sample radiation shield 28 (see, e.g., Fig. 3), sample 14, and/or sample support assembly 16 are maintained at 40K or lower. To shield sample 14 from the thermal radiation load of the higher temperature objective 12, objective assembly 200 includes radiation shield 203 (see, e.g., Fig. 3) that mounts to the mounting ring 202 (see, e.g., Fig. 3). Radiation shield 203 can further include aperture or window 204 to provide objective 12 an unimpeded view of sample 14. In accordance with example implementations, mounting ring 202 and shield 203 can be thermally connected to sample radiation shield 28 and maintained at 40K or lower. By providing a thermal environment about optic 12 that maintains the temperature, optical drift is substantially reduced which allows the user to place the optics a working distance from a sample for extended periods of time without drifting out of focus.

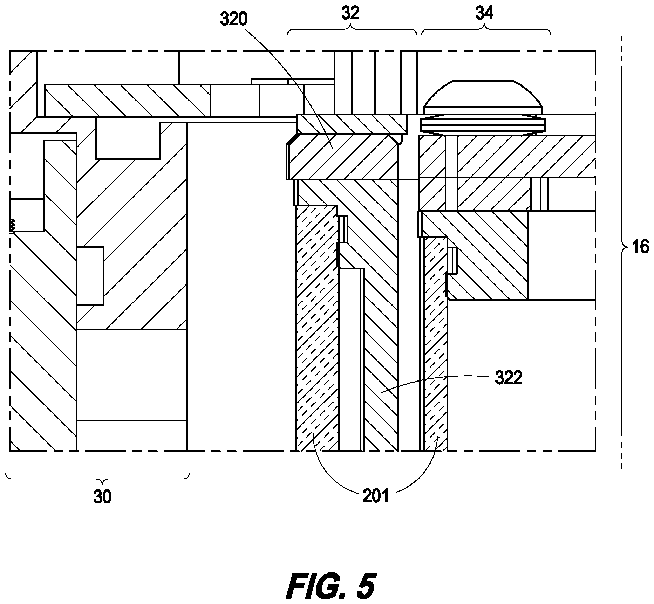

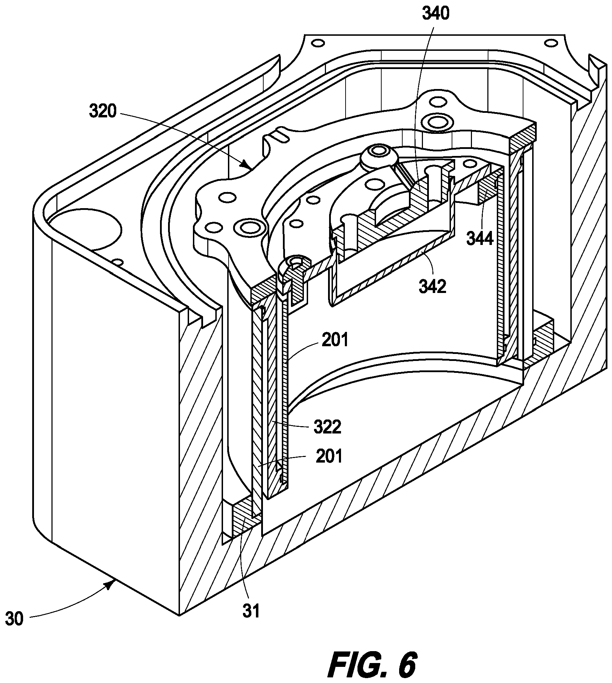

Referring next to Figs. 5 and 6, a portion of assembly 20 is shown in Fig. 5 that includes vacuum housing 30 which can be room temperature and a portion of sample support assembly 16 which can be at cryogenic temperatures. An isometric cutaway view of a portion of assembly 16 is shown in Fig. 6. Sample support assembly 16 can include a 1^{st} stage support ring 32 which can be a 40 K as well as a 2^{nd} stage support ring 34 which can be a 4 K. Accordingly, this interface between sample support assembly 16 and vacuum housing 30 is configured for efficient sample change by maintaining portions of the sample support assembly at two diffident temperatures. The 1^{st} stage support ring 32 can allow attachment of a radiation shield 28. The 2^{nd} stage support ring 34 can allow attachment of a sample. The 1^{st} stage support ring 32 and 2^{nd} stage support ring 34 can be physically connected to each other and vacuum housing 30 with insulating members 201 to allow the 1^{st} stage support ring 32, 2^{nd} stage support ring 34, and base housing 30 to be held at different temperatures yet still sufficiently mechanically engaged to provide vacuum.

As shown cryogenic analysis assembly 20 can include base housing 30 which couples to housing 26 and can be room temperature. Also depicted are portions of sample support assembly 16 which can be at cryogenic temperatures (e.g., 40K and 4K). Sample support assembly 16 can include a 1^{st} stage support assembly 32 and 2^{nd} stage sample support assembly 34. These staged assemblies can be maintained at different temperatures, for example, the 1^{st} stage at 40K and the 2^{nd} stage at 4K. In accordance with example implementations, sample radiation shield 28 can be thermally engaged with the 1^{st} stage and thus maintained at the same temperature as the 1^{st} stage (e.g., 40K). Additionally, 1^{st} stage support assembly 32 can shield 2^{nd} stage support assembly 34 from the thermal radiation of base 30.

1^{st} stage support assembly 32 can include support ring 320 and shield support 322. Support ring 320 and/or shield support 322 can be maintained at 40K, for example. About shield support 322 can be insulative members 201. One of the insulative members can be operatively engaged between support 322 and base support mounting ring 31. The other of the insulative members can be operatively engaged between support 322 and 2^{nd} stage sample support assembly 34. Shield support 322 can be configured as a radiation shield to prevent radiative heat transfer between the insulative members 201.

2^{nd} stage sample support assembly 34 can include ring 340 operatively engaged with sample support platform 342 and sample support platform ring 344. 2^{nd} stage sample support assembly 34 can be operatively engaged with 1^{st} stage sample support assembly 32 by the other insulative member 201. In accordance with example implementations, the 1^{st} stage can be maintained at a higher temperature than the 2^{nd} stage. The components of the 1^{st} stage at this higher temperature can be used to shield the lower temperature components of the 2^{nd} stage from the room temperature components of the housing or base of the assembly.

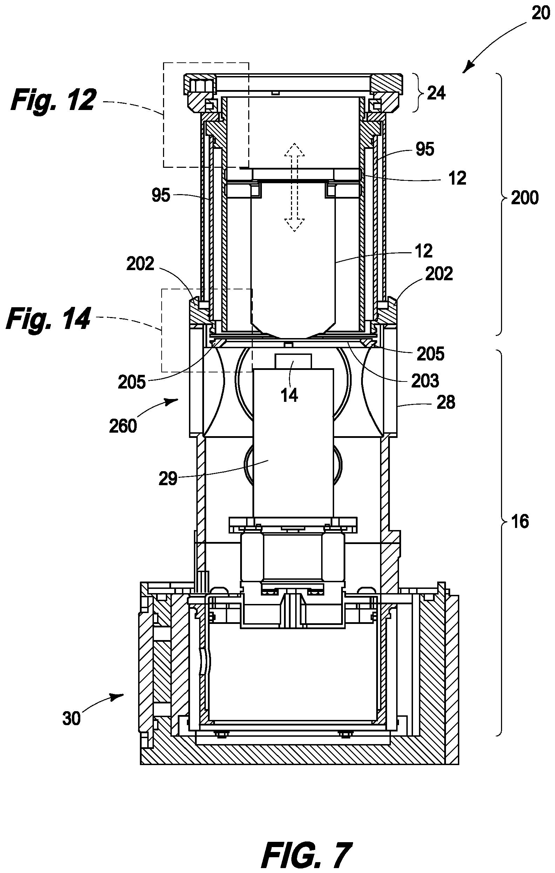

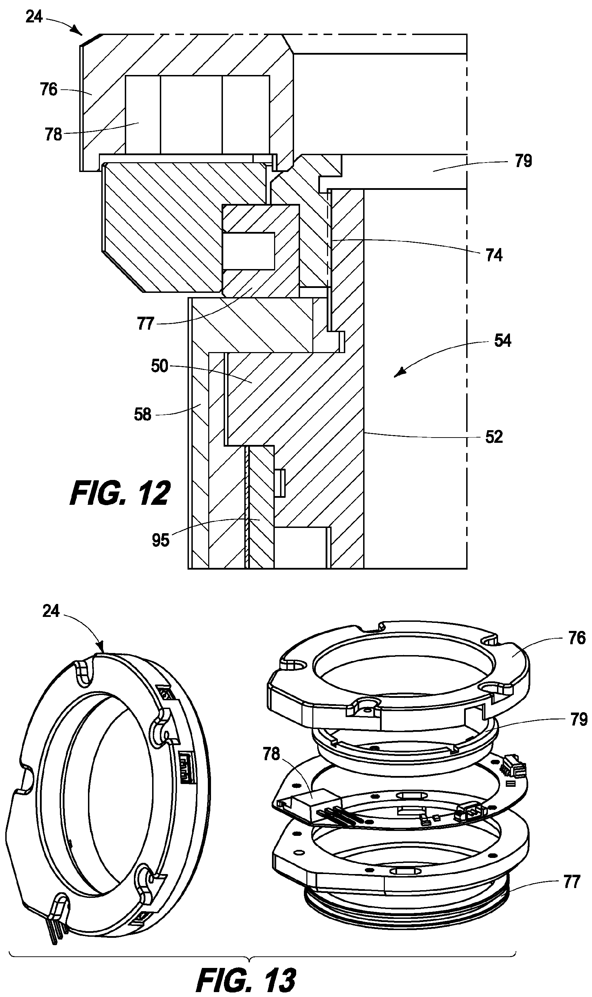

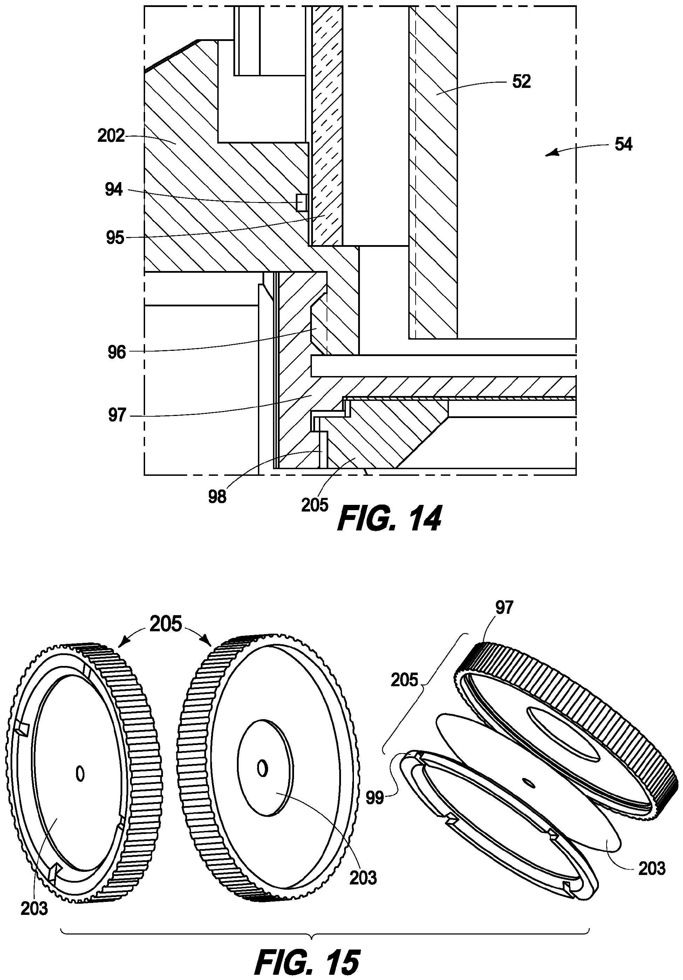

As an example, assembly 32 can be maintained at 40K while assembly 34 can be maintained at 4K. Both support assemblies 32 and 34 can be coupled to a cold (e.g., cryo) source configured to provide at least two cooling temperatures. Wherein the 1^{st} stage support ring 320 is configured for attachment of radiation shield 28, shield 28 can be maintained at a temperature (e.g., 40K) lower than room temperature but higher than the temperature (e.g., 4K) of sample 14. The 2^{nd} stage support ring 340 can allow attachment of sample 14. The 1^{st} stage support ring 320 and 2^{nd} stage support ring 340 can be physically connected to each other and base housing 30 with insulating members 201 to enable the 1^{st} stage support ring 320, 2^{nd} stage support ring 340, and base housing 30 to be held at different temperatures yet still mechanically engaged. Referring next to Fig. 7, another depiction of cryogenic assembly 20 is shown having objective 12 operatively aligned with the sample 14. Fig. 7 includes details of portions depicted in Figs. 12 and 14.

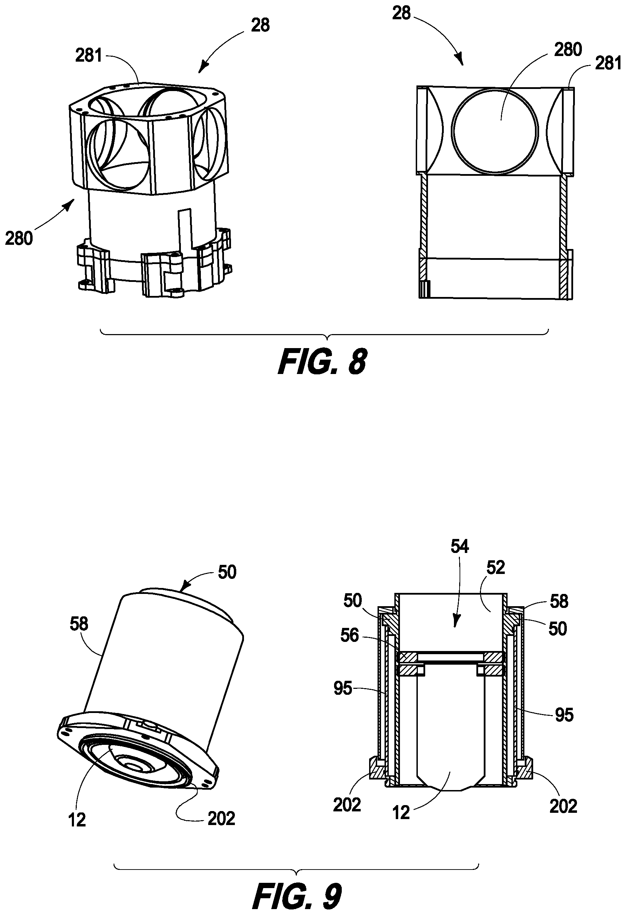

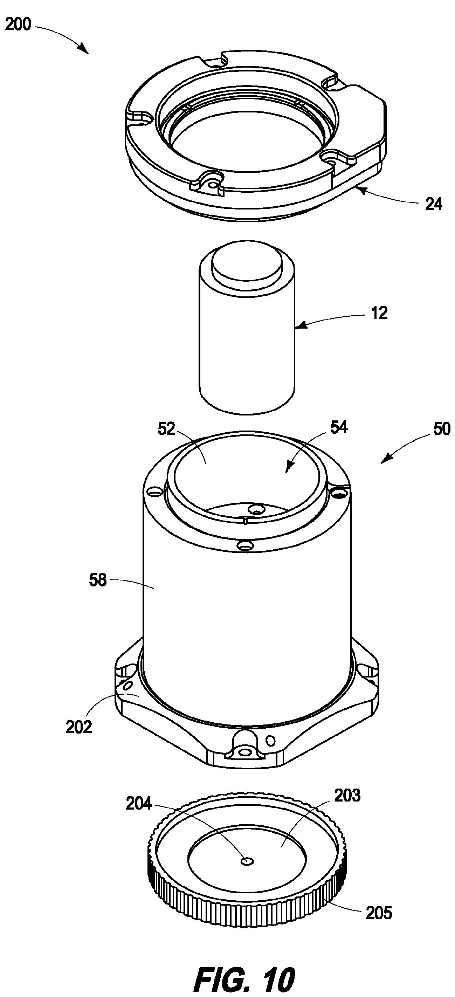

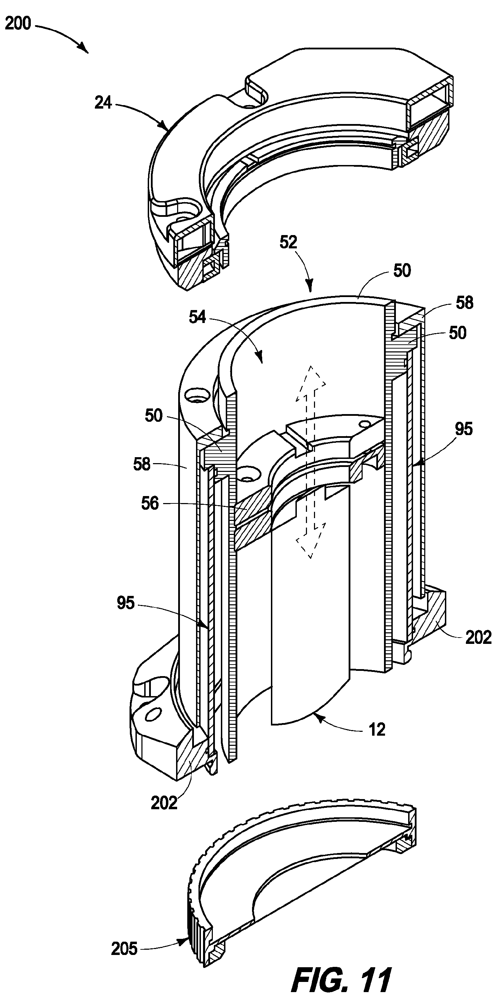

Referring to Fig. 8, perspective and cross section views of shield 28 are shown. Shield 28 can be configured to support objective assembly 200 for example via internal threads. Mounting ring 202 has mounting holes configured to attach objective assembly 200 to top 281 of radiation shield 28. Referring to Figs. 10 and 11, exploded and perspective cutaway views of objective assembly 200 are provided for additional engagement clarity.

Referring to Figs. 9-11, detailed views of objective assembly 200 are provided. Objective mount 50 can be configured to support and house objective 12. Mount 50 can include a sleeve 52 defining an internal chamber 54. Within chamber 54 can be objective 12. Objective 12 can be engaged with sleeve 52 by objective coupling apparatus 56. Objective coupling apparatus 56 can be configured to move objective 12 between positions within chamber 54. Accordingly, objective 12 can be moveable within chamber 54 to provide focus of sample 14 features. About sleeve 52 can be objective mount housing 58. Objective mount housing 58 can be configured as a thermal radiation shield that shields the objective from temperature fluctuations in the housing 26. Sleeve 52, apparatus 56 and housing 58 can be mechanically engaged but thermally separated from mounting ring 202 by insulative member 95. Accordingly, when shield 28 is maintained at one temperature, objective 12 can be maintained at another temperature. Mounting ring 202 has mounting holes to attach objective assembly 200 to the top of the radiation shield 28.

A portion of assembly 20 is shown as Fig. 12 as a detailed view of the thermal control assembly 24 coupled to the objective mount 50 about bezel 72 which can be coupled to objective mount 50 via bolting, for example. Objective mount 50 can be coupled to thermal control assembly 24 (shown in Fig. 13). Heater assembly 24 can include top cap 76 forming an enclosure for circuitry 78. Heater assembly 24 can also include an inner section 79. Section 79 can be wires wound inside a groove, such as copper wires. This section can be pressed into an outer section. Heater assembly 24 can also include heater ring 77 which can be retained in place via cap 76.

Heater assembly 24 can be configured to provide heat to form a warm zone of the objective mount by using a resistive element to provide thermal energy by method of joule heating. The temperature can be controlled using processing circuitry such as a proportional-integral-derivative controller (PID) to provide a stability of 2mK. As described heater assembly 24 can include five components: an inner section, outer shell, printed circuit board (PCB), top cap, and retaining ring. The wire wound about the inner section can be the resistive element. The inner section can be pressed into the outer shell. Processing circuitry in the form of the PCB can be mounted on top of the outer shell. The processing circuitry can include a thermistor, connectors, vias for resistive element connection, and a thermostat. The thermistor can be used in conjunction with a primary heater winding for PID control while the thermostat is used in conjunction with an uninterruptible power supply (UPS) and a secondary winding to create a failsafe back-up. The top cap 76 mounts on top of the PCB and bolts to the outer shell to provide a strong thermal connection through the heater ring system. The retaining ring 79 threads onto the objective mount 50 to provide a strong thermal connection to the mounting zone. The retaining ring can be captive between the top cap 76 and the inner section 77.

Another portion of assembly 20 is shown in Fig. 14 as a detailed view of the engagement of objective mount 50 within assembly 20. Insulating support 95 extends to mounting ring 202 at a point that can provide a surface for epoxy joint 94. Insulating support 95 can be G10 (fiberglass, peak, and/or teflon) insulator. Threaded interface 96 can couple mounting base 97 of insulative assembly 91 to assembly 20. 98 is a threaded connection that allows retaining ring 99 to couple and/or engage with insulative member 203. In accordance with Fig. 15, objective assembly 200 can also include a radiation shield assembly 205. Radiation shield assembly 205 can further include member 203 that can be beryllium copper aperture of about 100 microns in thickness. Member 203 can be transparent and/or define opening for objective 12 to receive and/or provide emissions from and/or to a sample. In accordance with example implementations, objective 12 can be configured to provide emissions to a sample that may cause excitation of the sample; objective 12 may also be configured to receive emissions in the form of light to view the sample. Member 203 can also be integrated as part of the objective and/or optics for example. This insulative member can be between retaining ring 99 and base 97.

Radiation shield assembly 203 can thread onto the mounting ring 202 of the objective assembly 200. The radiation shield assembly 203 can include a mounting base, a thin aperture disk, and a retaining ring. The mounting base can maintain the temperature of the aperture to that of the radiation shield. The small aperture on the thin disk limits the radiation from the warm zone transferring to the sample stage to reduce the heating of the sample. The thin disk also enables the low working distances due to a thickness of 100 microns which is slimmer than the working distance of the microscope objectives. The retaining ring maintains the location of the aperture disk while also maintaining good thermal contact between disk and the mounting base.

The objective assembly 200, radiation shield 28, and sample support assembly 16 can be configured to work independently and/or in concert to diminish vibration between the objective 12 and the sample 14. Objective assembly 200 can provide a majority of the interfaces as well as provide a majority of the thermal isolation for the objective 14. Objective assembly 200 interfaces with shield 28. Objective assembly 200 can provide thermal isolation by utilizing the thermal resistance of insulating support 95 connecting the internally threaded lens tube to the radiation shield mount. The G10 insulating support 95 can add a large amount of thermal resistance to the system allowing the internally threaded lens tube and the microscope objective to be maintained at a temperature -295K while 40K radiation shield mount can be maintained ~40K. The objective assembly 200 also shields the microscope objective from cooling due to radiative loss by encasing it with the internally threaded lens tube.

The radiation shield 28 can shield the sample from room temperature radiation while also giving a stable location for the objective assembly 200 to be mounted. The radiation shield can be rigidly mounted onto the 1^{st} stage ring 32 of the sample support 16 which is maintained at a temperature of 40K with temperature stability near 50mK. This in turn maintains the radiation shield at this temperature and stability. The radiation shield has windows which allow optical access from the side of sample space which allows freedom in imaging techniques.

The cryogenic assemblies of the present disclosure can be operated using the additional components of the cryogenic instrument described in US Patent No. 8,746,008, the entirety of which is incorporated by reference herein. Operators may also utilize Montana Instruments Cryostation^{Tm} (Montana Instruments, Bozeman MT.) with the assemblies of the present disclosure to view samples using objectives. In particular, the present disclosure can utilize the cryopower of the cryogenic instrument via conduction to achieve temperatures as low as 4K. Conductively coupling specific portions and/or components of the cryogenic analysis systems and/or heating coupled portions of the systems, of the present disclosure can provide the temperature of these components at the levels described herein.

In compliance with the statute, embodiments of the invention have been described in language more or less specific as to structural and methodical features. It is to be understood, however, that the entire invention is not limited to the specific features and/or embodiments shown and/or described, since the disclosed embodiments comprise forms of putting the invention into effect.

## Claims

1. A cryogenic analysis assembly configured for optical sample analysis, the assembly comprising:
an objective assembly operatively aligned with a sample support assembly, both the objective assembly and sample support assembly residing within a vacuum housing;
wherein the objective assembly defines an objective mount supporting an objective coupled to a mounting ring below a heater assembly; and
an insulative member between the objective mount and the mounting ring, the insulative member supporting the objective mount and thermally isolating the objective mount from the mounting ring.

2. The assembly of claim 1 further comprising a sample radiation shield operatively engaged between the objective assembly and the sample support assembly.

3. The assembly of claim 2 wherein the sample radiation shield defines at least one opening configured to allow visual inspection of a sample within the cryogenic assembly.

4. The assembly of claim 1 wherein the sample support assembly further comprises a 1^{st} stage support assembly operatively aligned about a 2^{nd} stage sample support assembly, wherein a first insulative member engages the 1^{st} stage support assembly with the 2^{nd} stage sample support assembly.

5. The assembly of claim 4 wherein the 1^{st} stage support assembly comprises a support ring engaged with a shield support.

6. The assembly of claim 5 further comprising a second insulative member between a base of the assembly and the 1^{st} stage support assembly.

7. The assembly of claim 4 wherein the 1^{st} stage support assembly thermally and operatively engages a sample radiation shield aligned between the sample support assembly and the objective assembly.

8. The assembly of claim 1 wherein the objective assembly further comprises an objective coupled to a sleeve, wherein the objective and sleeve are thermally engaged to be maintained at the same temperature.

9. The assembly of claim 8 wherein the objective is movable between positions within a chamber defined by the sleeve.

10. The assembly of claim 1 further comprising a housing about the objective assembly and the sample support assembly.

11. The assembly of claim 10 wherein the housing defines portals configured to view the sample within the assembly.

12. The assembly of claim 11 further comprising a sample radiation shield engaged between the objective assembly and sample support assembly.

13. The assembly of claim 12 wherein the sample support assembly includes a 1^{st} stage support and a 2^{nd} stage sample support separated by a sample support insulative member.

14. The assembly of claim 13 wherein the sample radiation shield is thermally engaged with the 1^{st} stage support.

15. The assembly of claim 14 wherein the mounting ring is thermally engaged with the sample radiation shield and the 1^{st} stage support.
